# EUROPÄISCHE PATENTSCHRIFT

(11) **EP 3 152 529 B1**
(45) Veröffentlichungstag und Bekanntmachung des Hinweises auf die Patenterteilung: **04.03.2020**
(21) Anmeldenummer: 14731171.6
(22) Anmeldetag: 03.06.2014
(51) Int. Cl.: G01F 17/00, G01F 23/284, G01F 23/296

(54) **BEHÄLTER- UND STÖRSTELLENPROFILERMITTLUNG**
CONTAINER AND DEFECT PROFILE IDENTIFICATION
DÉTERMINATION DE PROFIL DE DÉFAUTS ET DE RÉCIPIENT

(43) Veröffentlichungstag der Anmeldung: 12.04.2017
(73) Patentinhaber: VEGA Grieshaber KG, 77709 Wolfach (DE)
(72) Erfinder: WELLE, Roland, 77756 Hausach (DE)
(74) Vertreter: Maiwald Patent- und Rechtsanwaltsgesellschaft mbH
(86) Internationale Anmeldenummer: PCT/EP2014/061502
(87) Internationale Veröffentlichungsnummer: WO 2015/185116

(56) Entgegenhaltungen:
- EP-A1- 2 128 576
- EP-A1- 2 372 318
- EP-A1- 2 527 802
- WO-A1-03/016835
- DE-A1- 10 106 176
- DE-A1-102004 041 857

## Beschreibung

### Gebiet der Erfindung

Die Erfindung betrifft die Volumen- und Massebestimmung von Füllgütern oder Schüttgütern. Insbesondere betrifft die Erfindung ein Verfahren zur Bestimmung des Volumens oder der Masse eines Füllgutes, ein Füllstandmessgerät zur Bestimmung des Volumens oder der Masse eines Füllgutes, ein Programmelement und ein computerlesbares Medium.

### Hintergrund

Es sind Füllstandradargeräte bekannt, welche zur dreidimensionalen Füllstandmessung eingesetzt werden können. Unter "dreidimensionaler Füllstandmessung" ist zu verstehen, dass die Oberflächenform (Topologie) des Füllgutes vermessen werden kann. Eine derartige Erfassung der Topologie der Füllgutoberfläche wird beispielsweise durch ein Abscannen der Oberfläche erreicht, indem die Antenne und/oder das komplette Füllstandmessgerät entsprechend verkippt oder verdreht wird. Neben dieser mechanischen Steuerung der Hauptabstrahlrichtung der Füllstandradarantenne ist auch eine elektronische Strahlsteuerung möglich (oder eine Kombination aus beidem).

Vorteil dieser sog. dreidimensionalen Füllstandmessung ist u. a., dass die Bestimmung der Oberflächentopologie der Schüttgutoberfläche eine genauere Bestimmung des Volumens bzw. der Masse des Füllgutes erlaubt, da bei einem grobkörnigen Schüttgut oder einem bewegten Füllgut die Oberfläche oft nicht in der horizontalen Ebene verläuft.

Das Dokument DE 101 06 176 A1 betrifft eine Füllstandmessvorrichtung mit ausrichtbarem Messkopf sowie eine entsprechendes Füllstandmessverfahren. Der Messkopf umfasst eine Sender-/Empfängereinheit zum Aussenden eines Abtastsignals und Empfangen eines von dem Füllgut reflektierten Echosignals. Eine Behälterform eines Füllgutbehälters kann in unbefülltem Zustand gemessen und gespeichert werden. Echosignale, die nicht verwertbar sind, werden als solche identifiziert und verworfen.

Das Dokument EP 2 372 318 A1 betrifft eine Störechospeicherung bei Behälterrauschen. Dabei wird ein Störechospeicher eines Füllstandmessgeräts initialisiert und/oder aktualisiert, indem hierfür zumindest ein Wert für das sensoreigene Rauschen und/oder das Behälterrauschen herangezogen wird. Auf diese Weise kann vermieden werden, dass Füllstandechos im Behälterrauschen untergehen.

Das Dokument EP 2 128 576 A1 betrifft eine Auswertung der Echoform bei Füllstandsensoren. Ein in einem Behälter angeordnetes Füllstandmessgerät ermittelt auf Basis einer Form des Empfangssignals Informationen über eine Topographie der Füllgutoberfläche, woraus ein Befüllungsvolumen abgeleitet werden kann.

### Zusammenfassung der Erfindung

Es ist eine Aufgabe der Erfindung, die Volumen- oder Massebestimmung von Füllgütern weiter zu verbessern.

Diese Aufgabe wird durch die Merkmale der unabhängigen und nebengeordneten Patentansprüche gelöst. Weiterbildungen der Erfindung ergeben sich aus den abhängigen Patentansprüchen und der folgenden Beschreibung.

Gemäß einem ersten Aspekt der Erfindung ist ein Verfahren zur Bestimmung des Volumens oder der Masse eines Füllgutes angegeben, bei welchem zunächst ein Leerprofilerfassungsmodus in Abwesenheit eines Füllgutes eingenommen wird. Im Leerprofilerfassungsmodus erfolgt ein Abstrahlen eines Sendesignals durch die Antenne des Füllstandmessgeräts in verschiedene Richtungen zur Oberfläche des Füllgutes sowie ein Erfassen von Echokurven aus verschiedenen Bereichen der Oberfläche des Füllgutes. Dieses Erfassen von Echokurven aus verschiedenen Bereichen der Oberfläche kann durch eine Richtungsänderung des Sendesignals durch Ändern der Hauptabstrahlrichtung der Sende-/Empfangsantenne des Füllstandmessgeräts ermöglicht werden. Alternativ oder ergänzend kann das Erfassen von Echokurven aus verschiedenen Bereichen der Oberfläche durch eine Veränderung der Hauptempfangsrichtung der Sende-/Empfangsantenne des Füllstandmessgerätes ermöglicht werden.

Die Abwesenheit eines Füllgutes kann im vorliegenden Kontext als ein Zustand verstanden werden, in welchem gegebenenfalls vorhandene Restanteile eines Füllgutes im Behälter nicht zu signifikanten Reflexionen des Sendesignals führen. Es ist daher möglich, dass ein zuvor befüllter Behälter nach Entleerung noch Spuren des Füllmediums beinhaltet, im Kontext der vorliegenden Erfindung jedoch von einer Abwesenheit eines Füllgutes ausgegangen werden kann.

Die Hauptabstrahl- und/oder Hauptempfangsrichtung der Antenne kann durch ein Verkippen und/oder Verdrehen der Antenne, durch ein Verkippen und/oder ein Verdrehen des kompletten Füllstandmessgeräts, durch das Verdrehen eines Spiegels, der das Sendesignal ablenkt, durch das Verdrehen eines oder mehrerer Prismen, oder auf andere mechanische Weise erfolgen. Alternativ oder zusätzlich hierzu ist auch eine elektronische Strahlsteuerung ("digital beam forming") möglich, in welchem Falle ein Antennenarray verwendet wird.

Das zumindest an der Oberfläche des Füllgutes reflektierte Sendesignal wird daraufhin von der Antenne oder mehreren Empfangsantennen empfangen und es werden Echokurven aus dem reflektierten und empfangenen Sendesignal erzeugt. Auch wird die entsprechende Richtung erfasst, in welcher das Sendesignal, auf welches die jeweilige Echokurve zurückzuführen ist, abgestrahlt wurde. Es kann auch vorgesehen sein, die Richtung, aus welcher Signale von der Antenne empfangen werden, zu erfassen.

In anderen Worten wird der leere Container im Leerprofilerfassungsmodus abgescannt, indem die Hauptabstrahl- und/oder Hauptempfangsrichtung des Füllstandmessgeräts kontinuierlich oder diskontinuierlich (schrittweise) geändert wird. Zu ausgewählten Hauptabstrahl- und/oder Hauptempfangsrichtungen wird jeweils eine Echokurve erzeugt. Aus dieser Serie an Echokurven kann dann das Störstellenprofil im Behälter bestimmt werden, welches mit der Lage von Störobjekten korrespondiert.

Beispielsweise ist es möglich, dass in jeder Echokurve diejenigen Abschnitte der Echokurve identifiziert werden, welche auf Störobjekte zurückzuführen sind, welche also dadurch entstanden sind, dass das Sendesignal an dem jeweiligen Störobjekt reflektiert wurde. Das Störstellenprofil kann also beispielsweise aus einzelnen Abschnitten einer Serie an Echokurven bestehen, wobei jede dieser Echokurven unter einer bestimmten Hauptabstrahlrichtung der Antenne/des Füllstandmessgeräts erzeugt wurde.

Es ist aber auch möglich, dass aus diesen Echokurven eine Topologie der Störstellen im Behälter berechnet wird, und dass diese Topologie das Störstellenprofil darstellt.

In jedem Falle ermöglicht dieses Störstellenprofil diejenigen Winkel der Hauptabstrahlrichtung zu identifizieren, unter welchen die Hauptabstrahlrichtung ein Störobjekt schneidet, und unter denen demnach das Sendesignal von einem Störobjekt reflektiert wird.

In Anwesenheit eines Füllgutes nimmt das Füllstandmessgerät einen Volumen- oder Massebestimmungsmodus ein, bei dem weitere Echokurven erzeugt werden. Das Erzeugen der weiteren Echokurven kann wie oben beschrieben erfolgen, indem die Oberfläche des Füllgutes abgescannt wird. Daraufhin wird das Volumen oder die Masse des Füllgutes aus den weiteren Echokurven und unter Berücksichtigung des Störstellenprofils bestimmt.

Auf diese Weise wird das Ergebnis der Volumen- oder Massebestimmung weiter verbessert, da die Effekte der Störstellen, welche das Messergebnis verfälschen können, herausgerechnet werden können.

An dieser Stelle sei daraufhingewiesen, dass es sich bei dem Füllgut um eine Flüssigkeit oder ein Schüttgut handeln kann.

Wenn im Folgenden von einem Behälter die Rede ist, in welchem sich das Füllgut befindet, kann hierunter sowohl ein Behälter im eigentlichen Sinne verstanden werden, der das Füllgut enthält, ein Förderband, auf dem sich das Schüttgut befindet, oder eine offene Halde.

Der im Folgenden verwendete Begriff "Störobjekt" bezeichnet ein Objekt, welches sich zwischen der Antenne des Füllstandmessgeräts und dem Füllgut befindet, welches aber kein Teil des Behälters bzw. des Förderbands bildet. Bei dem Störobjekt handelt es sich also insbesondere nicht um den Behälterboden oder die Behälterwandungen und auch nicht um das Füllgut selbst. Vielmehr handelt es sich bei einem solchen Störobjekt um einen Fremdkörper im Behälter, beispielsweise eine Leiter oder ein Rohr.

Gemäß einer weiteren Ausführungsform der Erfindung erfolgt das Bestimmen des Störstellenprofils aus den Echokurven, die im Leerprofilerfassungsmodus erzeugt wurden, auch unter Verwendung der Geometrie eines Behälters, in dem sich das Füllgut befindet.

Die Berücksichtigung der Behältergeometrie bei der Bestimmung des Störstellenprofils ermöglicht es, dass Reflexionen, die auf den Behälter zurückgehen, bei der Störstellenprofilerstellung nicht berücksichtigt werden.

Gemäß einer weiteren Ausführungsform der Erfindung erfolgt das Bestimmen eines Gesamtprofils aus den Echokurven, die im Leerprofilerfassungsmodus erzeugt wurden, wobei das Gesamtprofil eine Kombination aus Behälterprofil und Störstellenprofil ist. Daraufhin erfolgt das Bestimmen des Störstellenprofils aus dem Gesamtprofil.

Es wird also der leere Behälter inklusive der Störobjekte abgescannt und daraufhin das Behälterprofil aus dem Gesamtprofil herausgerechnet, so dass nur noch das Störstellenprofil übrig bleibt.

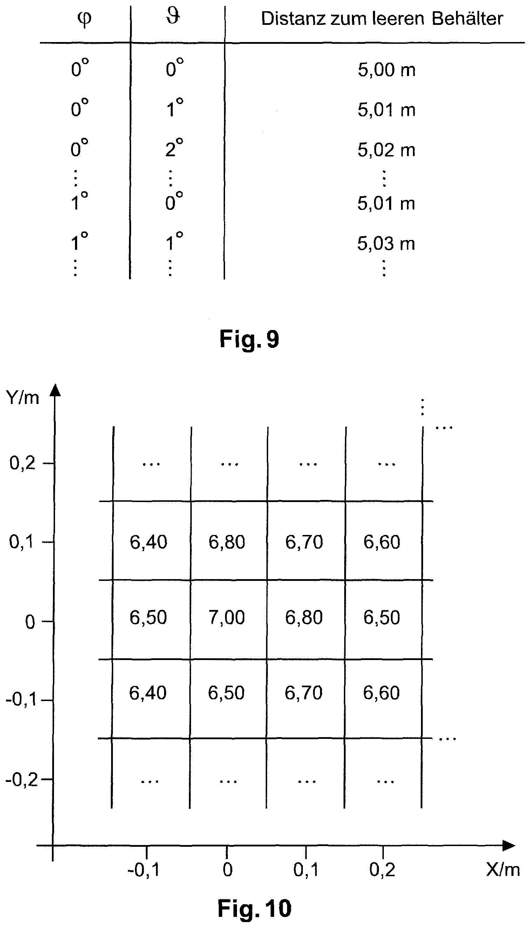

Sowohl bei dem Gesamtprofil als auch bei dem Behälterprofil und dem Störstellenprofil kann es sich jeweils um einen Datensatz handeln, welcher es erlaubt, Kenntnis darüber zu erlangen, in welcher Hauptabstrahlrichtung und in welcher Distanz zum Füllstandmessgerät sich ein Teil des Behälters oder ein Störobjekt befindet. Aus diesem Datensatz können demnach die Koordinaten der entsprechenden Reflektoren (ein Störobjekt oder ein Teil des Behälters) bestimmt werden. Es ist nicht erforderlich, dass diese Profile in eine Oberfläche umgerechnet werden. Beispielsweise kann sich der Datensatz in Form einer Liste (vgl. Fig. 9) oder matrixartig (vgl. Fig. 10) darstellen lassen.

Gemäß einer weiteren Ausführungsform der Erfindung erfolgt das Bestimmen des Störechoprofils aus dem Gesamtprofil unter Verwendung einer Stetigkeitsanalyse, um das bestimmte Gesamtprofil in ein Behälterprofil und das Störstellenprofil aufzuteilen.

Gemäß einer weiteren Ausführungsform der Erfindung erfolgt das Bestimmen der Geometrie des Behälters, in dem sich das Füllgut befindet, aus Echokurven, die im Leerprofilerfassungsmodus in Abwesenheit eines Füllgutes und in Abwesenheit von Störobjekten erzeugt wurden.

Gemäß einer weiteren Ausführungsform der Erfindung erfolgt das Bestimmen des Volumens oder der Masse des Füllgutes aus den weiteren Echokurven, die im Volumen- oder Massebestimmungsmodus erzeugt wurden, und unter Berücksichtigung der Geometrie des Behälters, in dem sich das Füllgut befindet.

Gemäß einer weiteren Ausführungsform der Erfindung erfolgt das Bestimmen einer Topologiekurve, welche die Oberflächentopologie des Füllgutes abbildet, aus den weiteren Echokurven, die im Volumen- oder Massebestimmungsmodus erzeugt wurden. Dieser Schritt umfasst das Löschen derjenigen Anteile der Topologiekurve, welche aus Sicht der Antenne des Füllstandmessgeräts hinter einer Störstelle liegen.

In anderen Worten wird im Volumen- oder Massebestimmungsmodus die Oberflächentopologie des Füllgutes inklusive evtl. vorhandener Störstellen und Teile des Behälters erfasst und danach werden diejenigen Anteile aus der Topologiekurve entfernt, welche auf eine Störstelle zurückzuführen sind, und somit die Füllgutoberfläche abschatten.

Gemäß einer weiteren Ausführungsform der Erfindung erfolgt ein Speichern der im Leerprofilerfassungsmodus erzeugten Echokurven und der damit zusammenhängenden Winkel der Hauptabstrahl- und/oder Hauptempfangsrichtung der Antenne in einem flüchtigen und/oder nicht flüchtigen Speicher des Füllstandmessgeräts.

Gemäß einer weiteren Ausführungsform der Erfindung erfolgt ein Einnehmen des Leerprofilerfassungsmodus in Anwesenheit eines Füllgutes, also bei teilweise gefülltem Behälter bzw. teilweise befüllter Halde.

Gemäß einem weiteren Aspekt der Erfindung ist ein Füllstandmessgerät zur Bestimmung des Volumens oder der Masse eines Füllgutes gemäß einem oben und im Folgenden beschriebenen Verfahren angegeben.

Gemäß einer Ausführungsform der Erfindung ist das Füllstandmessgerät zum Anschluss an eine 4-20mA-Zweidrahtleitung zur Versorgung des Füllstandmessgeräts mit der für den Messbetrieb erforderlichen Energie sowie zur Übertragung der vom Füllstandmessgerät erzeugten Messwerte ausgeführt.

Gemäß einem weiteren Aspekt der Erfindung ist ein Programmelement angegeben, das, wenn es auf einem Prozessor des Füllstandmessgeräts ausgeführt wird, das Füllstandmessgerät anweist, die oben und im Folgenden beschriebenen Schritte durchzuführen.

Gemäß einem weiteren Aspekt der Erfindung ist ein computerlesbares Medium angegeben, auf dem ein oben beschriebenes Programmelement gespeichert ist.

Das Computerprogrammprodukt kann Teil einer Software sein, die auf einem Prozessor des Füllstandmessgeräts gespeichert ist. Der Prozessor kann dabei ebenso Gegenstand der Erfindung sein. Weiterhin kann das Programmelement ein Programmelement sein, welches schon von Anfang an die Erfindung verwendet, sowie auch ein Programmelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

### Kurze Beschreibung der Figuren

Fig. 1 zeigt eine Messanordnung zur Schüttgutvermessung.
Fig. 2 zeigt eine Messanordnung zur Vermessung eines Füllgutes in einem Behälter.
Fig. 3 zeigt Beispiele von Echokurven gemäß einem Ausführungsbeispiel der Erfindung.
Fig. 4 zeigt eine Messanordnung sowie Echokurven gemäß einem Ausführungsbeispiel der Erfindung.
Fig. 5 zeigt eine Messanordnung gemäß einem weiteren Ausführungsbeispiel der Erfindung.
Fig. 6 zeigt ein Störstellenprofil gemäß einem Ausführungsbeispiel der Erfindung.
Fig. 7 zeigt ein Gesamtprofil gemäß einem Ausführungsbeispiel der Erfindung.
Fig. 8 zeigt ein Füllgutprofil nach Berücksichtigung des Störstellenprofils.
Fig. 9 zeigt eine Darstellungsform eines Behälterprofils oder Störstellenprofils gemäß einem Ausführungsbeispiel der Erfindung.
Fig. 10 zeigt eine alternative Darstellungsform gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

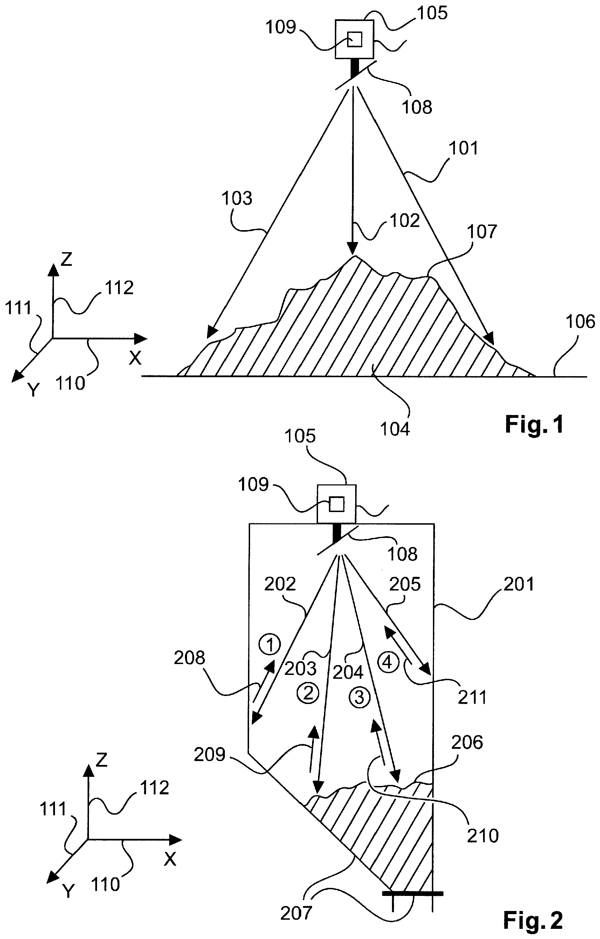

Fig. 1 zeigt ein Füllstandmessgerät 105, beispielsweise ein Füllstandradargerät, welches in der Lage ist, die Topologie einer Füllgutoberfläche zu erfassen. Das Messgerät weist eine Sende- und Empfangsantenne 108 und eine daran angeschlossene Elektronik 109 auf.

Das Messgerät ist in der Lage, Echosignale oder Echokurven aus unterschiedlichen Winkelbereichen 101, 102, 103 zu erfassen. Zu jeder erfassten Echokurve wird die Distanz zum jeweiligen Punkt der Oberfläche des Schüttgutes 104 ermittelt. Durch numerische Integration dieser Distanzwerte und unter Postulierung einer ebenen Oberfläche 106 unter dem Schüttgut kann das Volumen der Schüttguthalde 107 ermittelt werden. Bei bekannter Dichte lässt sich weiterhin die Masse an Schüttgut berechnen.

Völlig anders gestalten sich die Verhältnisse in industrietypischen Behältern. Fig. 2 zeigt ein entsprechendes Beispiel. Die Antenne 108 strahlt ein Sendesignal 202, 203, 204, 205 unter mehreren Winkeln in Richtung des Füllgutes aus. Das reflektierte Sendesignal 208, 209, 210, 211 wird anschließend wieder von der Antenne empfangen.

Die Integration der zu den Winkelrichtungen 1 bis 4 erfassten Distanzwerte kann hier zu einem völlig falschen Ergebnis führen. Zum einen wird hier nicht zwischen Reflexionen des Behälters 201 und solchen des Schüttgutes 206 unterschieden. Zum anderen wird der schräge Verlauf des Behälterbodens 207 in keiner Weise bei der Berechnung des Volumens berücksichtigt.

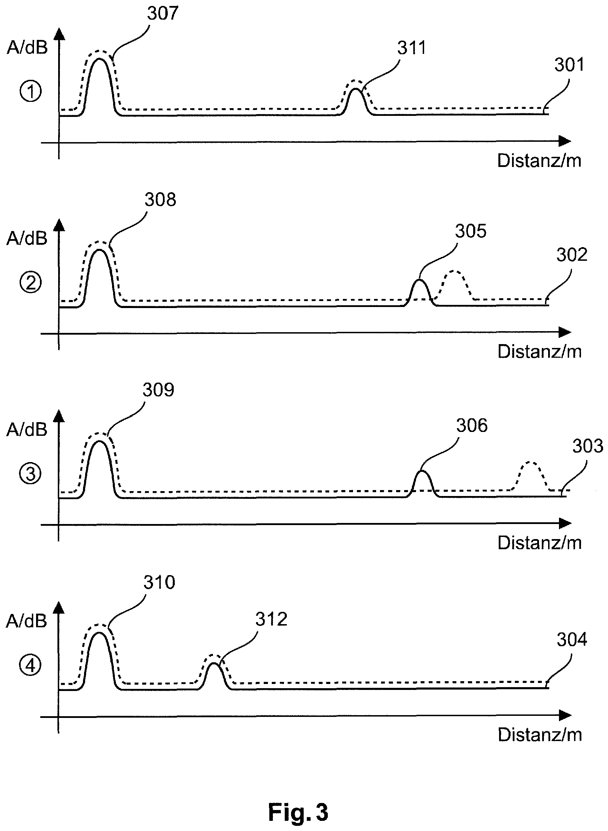

Fig. 3 zeigt mehrere Echokurven gemäß einem Ausführungsbeispiel der Erfindung. Das Radarmessgerät wird direkt nach der Installation auf einem leeren Behälter 201 (vgl. Fig. 2) in einen Leerprofilerfassungsmodus versetzt. Dabei erfasst das Radarmessgerät die Echokurven aus unterschiedlichen Winkelbereichen 202, 203, 204, 205 des leeren Behälters, und speichert diese zusammen mit den jeweiligen Winkeln direkt oder in komprimierter Form im Speicher (flüchtig und/oder nichtflüchtig) des Messgerätes ab.

Die entsprechenden Echokurven 307, 308, 309, 310 sind in Fig. 3 gestrichelt dargestellt. Zudem kann die Topologie des leeren Behälters (also die Distanz zum Behälterboden und/oder zur Behälterwand) in Abhängigkeit von den jeweiligen Erfassungswinkeln berechnet werden.

Während des daran anschließenden normalen Betriebsmodus des Gerätes, in diesem Zusammenhang auch als Volumen- oder Massebestimmungsmodus bezeichnet, werden nun fortlaufend Echokurven 301, 302, 303, 304 aus den unterschiedlichen Bereichen des Behälters erfasst, und mit den zuvor erlernten Echokurven des leeren Behälters verglichen. Auf diese Art ist es möglich, Reflexionen 305, 306 der Füllgutoberfläche von Reflexionen 311, 312 an der Behälteroberfläche zu unterscheiden.

Zudem kann unter Berücksichtigung der Topologie des leeren Behälters und unter Verwendung der als vom Füllgut stammend identifizierten Echos das Volumen des Schüttguts in korrekter Weise ermittelt werden.

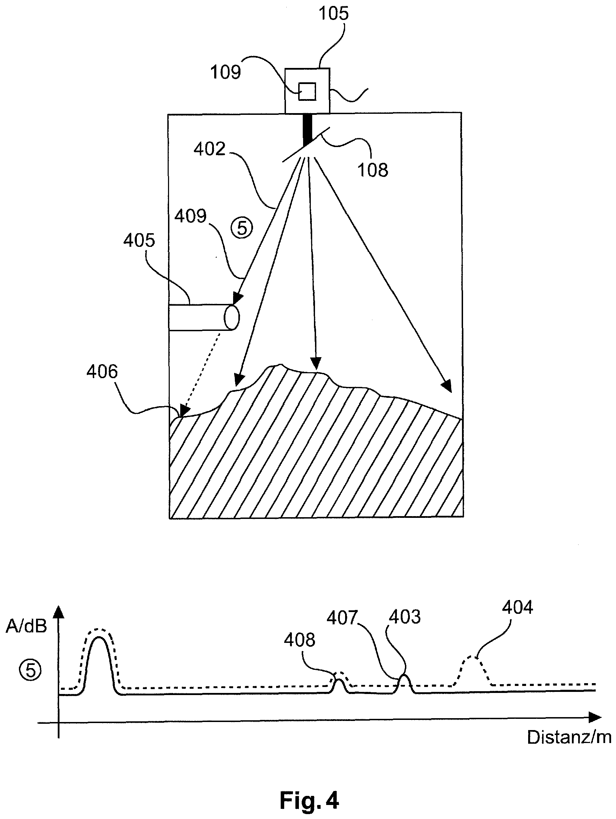

Die zuvor aufgezeigte Speicherung der Echokurven des leeren Behälters kann in vorteilhafter Weise auch dazu verwendet werden, die Identifikation des vom Schüttgut verursachten Echos zu vereinfachen. Fig. 4 zeigt ein entsprechendes Beispiel. Das Radarmessgerät 105 erfasst in Winkelrichtung Nr. 5 (402) eine Echokurve 403, welche neben dem von der Füllgutoberfläche 406 verursachten Echo 407 auch ein Echo 408 des im Behälter befindlichen Rohres 405 aufweist. Die Entscheidung, welches Echo von der Schüttgutoberfläche 406 stammt, wird trivial, wenn die erfasste Echokurve 403 mit der Echokurve 404 des leeren Behälters in der entsprechenden Winkellage verglichen wird.

Die zuvor dargelegten Verhältnisse treten immer dann auf, wenn die physikalische Ausdehnung eines Störobjektes oder Störers 405 kleiner ist als die Breite des Radarstrahles 409 an der entsprechenden Stelle, da nur dann auch Reflexionen aus dem Bereich hinter dem Störobjekt vom Radarmessgerät erfasst und verarbeitet werden können.

Völlig anders gestalten sich die Verhältnisse jedoch, wenn das zuvor aufgezeigte Überstrahlen eines Störobjektes zwischen Radarmessgerät und Schüttgutoberfläche ausbleibt.

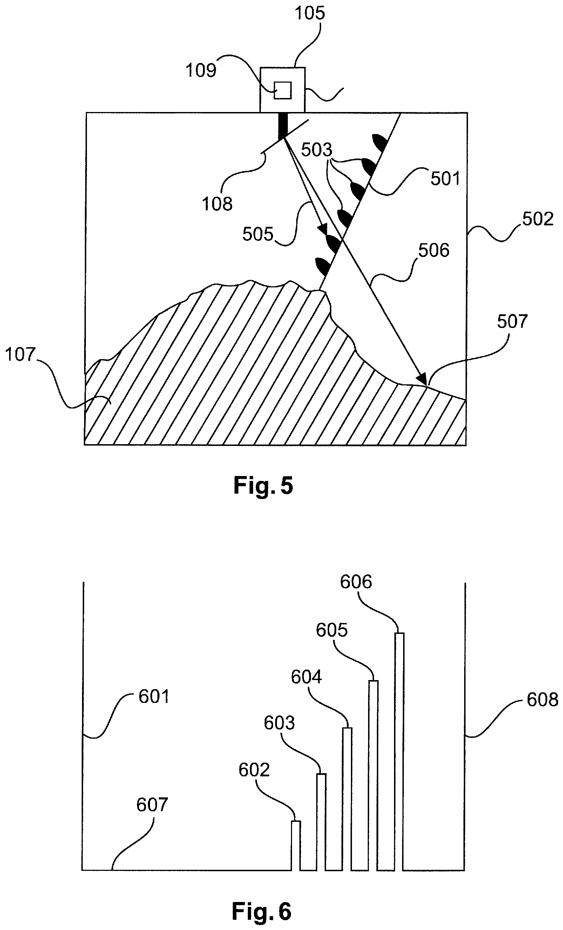

Fig. 5 zeigt eine entsprechende Konstellation. Eine im Behälter 502 befindliche Leiter 501 besitzt mehrere Stufen 503, welche aufgrund der geringen Distanz zum Radarmessgerät 105 von diesem nicht überstrahlt werden können, d.h. nahezu die gesamte Energie des Radarsignals wird an den Stufen bei entsprechender Lage der Hauptstrahlrichtung 505 reflektiert. Zeigt die Hauptstrahlrichtung des Radarmessgerätes jedoch in eine Richtung 506, welche eine Ausbreitung zwischen den Stufen erlaubt, so kann die Distanz zur Füllgutoberfläche 507 korrekt ermittelt werden.

Wird im Behälter nach Fig. 5 eine Leerprofilerfassung durchgeführt, d.h. würde der leere Behälter vom Radarmessgerät ausgemessen, so könnte die Leiter irrtümlicherweise als Behältergrenze erfasst werden. Eine anschließende Berechnung des Volumens im Behälter würde grundsätzlich fehlerhaft sein.

Fig. 6 zeigt ein vom Radarmessgerät erfasstes Profil des scheinbar leeren Behälters 502, wobei die Lage der Behälterwandung 601, 608 sowie des Behälterbodens 607 korrekt erfasst werden, die Distanzwerte zu den Stufen der Leiter jedoch irrtümlicherweise einen fehlerhaften Verlauf 602, 603, 604, 605, 606 der Behälterbegrenzung ergeben.

Dem dargestellten Problem kann auf unterschiedliche Art und Weise begegnet werden. Zum einen ist es möglich, die grundsätzliche Behälterform vom Kunden als Parameter eingeben zu lassen. Aus dem Verlauf der erfassten Oberfläche und/oder unter Hinzunahme von Stetigkeitsanalysen lässt sich das ermittelte Profil (Fig. 6) weiter in Subprofile unterteilen, die ihrerseits klassifiziert werden können ("Leerer Behälter", "Einbauten/Störer"). Das Leerprofil des Behälters besteht demnach aus den Begrenzungslinien 601, 607, 608, das Störstellenprofil der Einbauten aus dem Verlauf 602, 603,604, 605, 606.

Alternativ oder zusätzlich kann in dem Füllstandmessgerät eine automatische Plausibilitätsanalyse durchgeführt werden, in welcher untypische, d.h. massiv unstetige Verläufe der Oberfläche eines Behälterleerprofils erkannt und als Störstellenprofil klassifiziert werden.

Die zuvor aufgezeigte Ermittlung von zwei verschiedenen Profilen bietet für die Signalverarbeitung im laufenden Betrieb deutliche Vorteile.

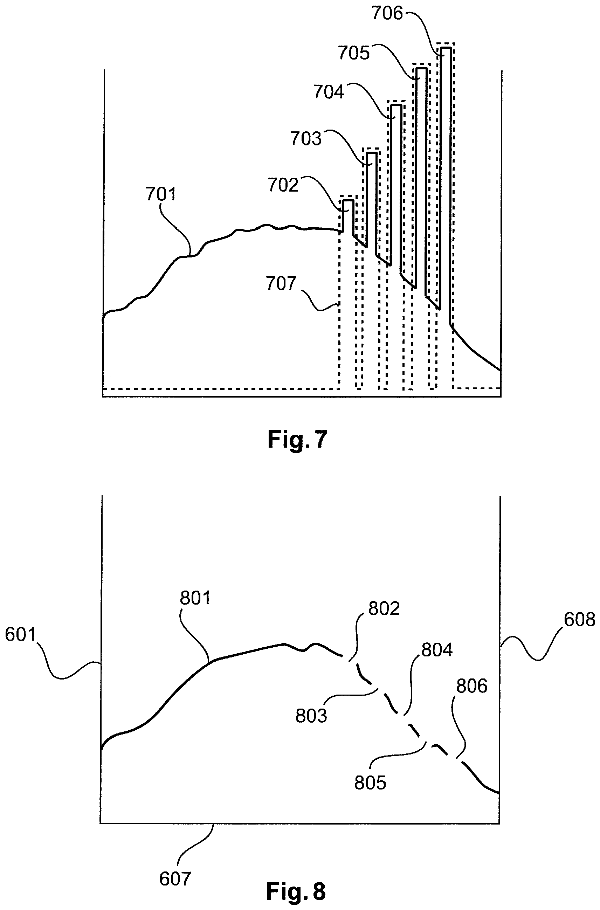

Fig. 7 zeigt das entsprechende Prinzip. Die vom Füllstandmessgerät nach bekannten Verfahren ermittelte Rohtopologie 701 des Schüttgutes und der Leiter beinhaltet die von den Leitersprossen verursachten hohen Messwerte 702, 703, 704, 705, 706. In einem weiteren Signalverarbeitungsschritt wird das ermittelte Topologieprofil 701 nun mit dem zuvor ermittelten Störstellenprofil 707 (siehe gestrichelte Kurve) verglichen, und Anteile der Topologiekurve, welche unterhalb des Störstellenprofils liegen, werden gelöscht.

Der Kurvenzug 801 in Fig. 8 zeigt die daraus resultierende, in der Praxis zweidimensionale Topologiekurve mit den sich ergebenden Lücken 802, 803. 804. 805, 806. Um die fehlende Information aus den Winkelbereichen der Lücken zu ergänzen, kann nun vorteilhaft eine Interpolation der Topologiekurve, vorzugsweise eine zweidimensionale Interpolation, durchgeführt werden. Die eigentliche Volumenberechnung erfolgt durch numerische Integration der ggf. interpolierten Topologiekurve unter Berücksichtigung der Topologiekurve des leeren Behälters (Leerpofil 601, 607, 608), welche zuvor subtrahiert werden kann.

Fig. 9 zeigt eine speicheroptimierte Darstellungsform einer Leerprofiltopologie (in diesem Zusammenhang auch als Behälterprofil bezeichnet) oder einer Störechotopologie, welche in diesem Zusammenhang auch als Störstellenprofil bezeichnet wird.

Im Speicher des Radargerätes werden hier an Stelle der kompletten Echokurven 307, 308, 309, 310 lediglich die Entfernungswerte zur entsprechenden Behälterbegrenzung bzw. zum entsprechenden Störer abgespeichert. Zudem muss zu jedem Entfernungswert die zugehörige Winkellage vermerkt werden.

Fig. 10 zeigt eine alternative Darstellungsform einer Leerprofiltopologie oder einer Störechotopologie in kartesischen Koordinaten. Die Koordinaten der Matrix entsprechen den Ortskoordinaten x 110, y 111 und z 112 des Radarmessgerätes oder der vermessenen Stelle des Behälters bzw. des Störobjektes. Die Einträge der Matrix repräsentieren die Entfernung an der entsprechenden Stelle zwischen dem Radargerät und der Oberfläche der Behälterwandung (Leerprofiltopologie) bzw. zwischen dem Radargerät und der Oberfläche eines Störers im Behälter (Störechotopologie).

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verfahren zur Bestimmung des Volumens oder der Masse eines Füllgutes (107), aufweisend die Schritte:
Einnehmen eines Leerprofilerfassungsmodus in Abwesenheit eines Füllgutes;
Abstrahlen eines Sendesignals in verschiedene Richtungen zur Oberfläche des Füllgutes;
Empfangen des an zumindest der Oberfläche des Füllgutes reflektierten Sendesignals;
Erzeugen von Echokurven aus dem reflektierten und daraufhin empfangenen Sendesignal, sowie Erfassen der entsprechenden Richtung, aus welcher das jeweilige Sendesignal reflektiert wurde;
Bestimmen eines Störstellenprofils aus diesen Echokurven, welches mit der Lage von Störobjekten korrespondiert;
Identifizieren, anhand des Störstellenprofils, von denjenigen Winkeln einer Hauptstrahlrichtung, unter welchen die Hauptstrahlrichtung ein Störobjekt schneidet;
Einnehmen eines Volumen- oder Massebestimmungsmodus in Anwesenheit eines Füllgutes;
Erzeugen weiterer Echokurven;
Bestimmen des Volumens oder der Masse des Füllgutes aus den weiteren Echokurven unter Berücksichtigung des Störstellenprofils.

2. Verfahren nach Anspruch 1, weiter aufweisend den Schritt:
Bestimmen des Störstellenprofils aus den Echokurven, die im Leerprofilerfassungsmodus erzeugt wurden, unter Verwendung der Geometrie eines Behälters, in dem sich das Füllgut befindet.

3. Verfahren nach einem der vorhergehenden Ansprüche, weiter aufweisend den Schritt:
Bestimmen eines Gesamtprofils aus den Echokurven, die im Leerprofilerfassungsmodus erzeugt wurden, wobei das Gesamtprofil eine Kombination aus Behälterprofil und Störstellenprofil ist;
Bestimmen des Störstellenprofils aus dem Gesamtprofil.

4. Verfahren nach Anspruch 3,
wobei das Bestimmen des Störstellenprofils aus dem Gesamtprofil unter Verwendung einer Stetigkeitsanalyse, um das Gesamtprofil in ein Behälterprofil und das Störstellenprofil aufzuteilen, erfolgt.

5. Verfahren nach einem der vorhergehenden Ansprüche, weiter aufweisend den Schritt:
Bestimmen der Geometrie des Behälters, in dem sich das Füllgut befindet, aus Echokurven, die im Leerprofilerfassungsmodus in Abwesenheit eines Füllgutes und in Abwesenheit von Störobjekten erzeugt wurden.

6. Verfahren nach einem der vorhergehenden Ansprüche, weiter aufweisend den Schritt:
Bestimmen des Volumens oder der Masse des Füllgutes aus den weiteren Echokurven, die im Volumen- oder Massebestimmungsmodus erzeugt wurden, und unter Berücksichtigung der Geometrie des Behälters, in dem sich das Füllgut befindet.

7. Verfahren nach einem der vorhergehenden Ansprüche, weiter aufweisend den Schritt:
Bestimmen einer Topologiekurve, welche die Oberflächentopologie des Füllgutes abbildet, aus den weiteren Echokurven, die im Volumen- oder Massebestimmungsmodus erzeugt wurden;
wobei dieser Schritt das Löschen derjenigen Anteile der Topologiekurve umfasst, welche aus Sicht der Antenne des Füllstandmessgerätes hinter einer Störstelle liegen.

8. Verfahren nach einem der vorhergehenden Ansprüche, weiter aufweisend den Schritt:
Speichern der im Leerprofilerfassungsmodus erzeugten Echokurven.

9. Verfahren nach einem der vorhergehenden Ansprüche, weiter aufweisend den Schritt:
Einnehmen des Leerprofilerfassungsmodus in Anwesenheit eines Füllgutes.

10. Füllstandmessgerät (105) zur Bestimmung des Volumens oder der Masse eines Füllgutes (107), das Füllstandmessgerät (105) aufweisend:
eine Sende- und Empfangsantenne (108) und eine daran angeschlossene Elektronik (109), die dazu eingerichtet sind, das Verfahren nach einem der vorhergehenden Ansprüche auszuführen.

11. Füllstandmessgerät (105) nach Anspruch 10,
ausgeführt zum Anschluss an eine 4-20 mA Zweidrahtleitung zur Versorgung des Füllstandmessgeräts mit der für den Messbetrieb erforderlichen Energie sowie zur Übertragung der vom Füllstandmessgerät erzeugten Messwerte.

12. Programmelement, das, wenn es auf einem Prozessor eines Füllstandmessgeräts ausgeführt wird, das Füllstandmessgerät anweist, die Schritte des Verfahrens gemäß einem der Ansprüche 1 bis 9 auszuführen .

13. Computerlesbares Medium, auf dem ein Programmelement nach Anspruch 12 gespeichert ist.

## Claims

1. A method for determining the volume or the mass of a filling material (107), comprising the steps of:
assuming an empty profile detection mode in the absence of a filling material;
emitting a transmission signal in various directions to the surface of the filling material;
receiving the transmission signal reflected on at least the surface of the filling material;
generating echo curves from the reflected and subsequently received transmission signal, and determining a corresponding direction from which the respective transmission signal was reflected;
determining an interference point profile from these echo curves that corresponds to the location of interfering objects;
identifying, on the basis of the interference point profile, angles of a main beam direction, at which the main beam direction intersects an interfering object;
assuming a volume or mass detection mode in the presence of a filling material;
generating further echo curves;
determining the volume or the mass of the filling material from the further echo curves, based on the interference point profile.

2. The method of claim 1, further comprising the step of:
determining the interference point profile from the echo curves generated in the empty profile detection mode, using a geometry of a container containing the filling material.

3. The method according to any of the preceding claims, further comprising the step of:
determining an overall profile from the echo curves generated in the empty profile detection mode, wherein the overall profile is a combination of a container profile and the interference point profile;
determining the interference point profile from the overall profile.

4. The method of claim 3,
wherein the interference point profile is determined from the overall profile using a consistency analysis subdividing the overall profile into a container profile and the interference point profile.

5. The method according to any of the preceding claims, further comprising the step of:
determining the geometry of the container containing the filling material, from the echo curves generated in the empty profile detection mode in the absence of the filling material and in the absence of interfering objects.

6. The method according to any of the preceding claims, further comprising the step of:
determining the volume or the mass of the filling material from the further echo curves generated in the volume or mass detection mode, taking into account the geometry of the container containing the filling material.

7. The method according to any of the preceding claims, further comprising the step of:
determining a topology curve that represents a surface topology of the filling material from the further echo curves generated in the volume or mass detection mode;
wherein this step comprises eliminating portions of the topology curve located behind an interference point, from the perspective of the antenna of the fill level measuring device.

8. The method according to any of the preceding claims, further comprising the step of:
storing the echo curves generated in the empty profile detection mode.

9. The method according to any of the preceding claims, further comprising the step of:
assuming the empty profile detection mode in presence of a filling material.

10. A fill level measuring device (105) for determining the volume or the mass of a filling material, the fill level measuring device comprising:
a transmission and a receiving antenna (108) and electronics coupled thereto, which is configured to perform the method according to any of the preceding claims.

11. The fill level measuring device (105) of claim 10,
configured to be connected to a 4-20 mA two-wire line for supplying the fill level measuring device with energy for measurement operation and for transmitting measurement values generated by the fill level measuring device.

12. A program element, which, when executed on a processor of a fill level measuring device, instructs the fill level measuring device to perform the steps of the method according to claims 1 to 9.

13. A computer-readable medium on which a program element according to claim 12 is stored.

## Revendications

1. Méthode pour déterminer le volume ou la masse d'un produit de remplissage (107), ladite méthode comprenant les étapes consistant à:
adopter un mode de détection de profil à vide en l'absence d'un produit de remplissage ;
émettre un signal de transmission dans des directions variées vers la surface du produit de remplissage;
recevoir le signal de transmission réfléchi au moins par la surface du produit de remplissage;
générer des courbes d'écho à partir du signal de transmission réfléchi et ultérieurement réceptionné, et déterminer la direction correspondant de la direction de provenance du dit signal de transmission réfléchi;
déterminer un profil de point d'interférence à partir de ces courbes d'écho, qui correspondent à l'emplacement des objets interférant ;
identifier, sur la base du profil de point d'interférence, les angles d'une direction de propagation principale, pour lesquels la direction de propagation principale croise un objet interférant;
adopter un mode de détection de volume ou de masse en présence d'un produit de remplissage;
générer des courbes d'écho supplémentaires ;
déterminer le volume ou la masse du produit de remplissage à partir des courbes d'écho supplémentaires, sur la base du profil de point d'interférence.

2. Méthode selon la revendication 1, comprenant en outre l'étape consistant à :
déterminer le profil de point d'interférence à partir des courbes d'écho générées en mode de détection de profil à vide utilisant la géométrie d'un réservoir contenant le produit de remplissage.

3. Méthode selon l'une quelconque des revendications précédentes, comprenant en outre l'étape consistant à :
déterminer un profil général à partir des courbes d'écho générées en mode de détection de profile à vide, ledit profil général étant une combinaison d'un profil de réservoir et du profil de point d'interférence ;
déterminer le profil de point d'interférence à partir du profil général.

4. Méthode selon la revendication 3,
le profil de point d'interférence étant déterminé à partir du profil général utilisant une analyse de cohérence pour partitionner le profil général en un profil de réservoir et le profil de point d'interférence.

5. Méthode selon l'une quelconque des revendications précédentes, comprenant en outre l'étape consistant à :
déterminer la géométrie du réservoir contenant le produit de remplissage, à partir des courbes d'écho générées en mode de détection de profile à vide en l'absence du produit de remplissage et en l'absence d'objet interférant.

6. Méthode selon l'une quelconque des revendications précédentes, comprenant en outre l'étape consistant à :
déterminer le volume ou la masse du produit de remplissage à partir des courbes d'écho générées en mode de détection de volume ou de masse en prenant en compte la géométrie du réservoir contenant le produit de remplissage.

7. Méthode selon l'une quelconque des revendications précédentes, comprenant en outre l'étape consistant à :
déterminer une courbe de topologie représentant une topologie de surface du produit de remplissage à partir des courbes d'échos supplémentaires générées en mode de détection de volume ou de masse ;
cette étape comprenant l'élimination des portions de la courbe de topologie situées derrière un point d'interférence, du point de vue de l'antenne de l'appareil de mesure de niveau de remplissage.

8. Méthode selon l'une quelconque des revendications précédentes, comprenant en outre l'étape consistant à :
stocker les courbes d'échos générées en mode de détection de profile à vide.

9. Méthode selon l'une quelconque des revendications précédentes, comprenant en outre l'étape consistant à :
adopter le mode de détection à vide en présence d'un produit de remplissage.

10. Appareil de mesure de niveau de remplissage (105) pour déterminer le volume ou la masse du produit de remplissage, comprenant :
une antenne de transmission et de réception (108) et une électronique étant connectée à celles-ci, l'électronique étant configurée pour effectuer la méthode selon l'une quelconque des revendications précédentes.

11. L'appareil de mesure de niveau de remplissage (105) selon la revendication 10,
est configuré pour être connecté à une ligne bifilaire 4-20mA pour approvisionner l'appareil de mesure de niveau de remplissage en énergie pour des opérations de mesure et pour transmettre les valeurs de mesure générées par l'appareil de mesure de niveau de remplissage.

12. Élément de programme, qui, lorsqu'il est exécuté sur un processeur d'un appareil de mesure de niveau de remplissage, instruit l'appareil de mesure de remplissage à effectuer les étapes de la méthode selon les revendications 1 à 9.

13. Support lisible par ordinateur sur lequel est enregistré un élément de programme selon la revendication 12.
